# EUROPEAN PATENT SPECIFICATION

(11) **EP 2 697 997 B1**
(45) Date of publication and mention of the grant of the patent: **11.12.2019**
(21) Application number: 12718119.6
(22) Date of filing: 13.04.2012
(51) Int. Cl.: H04W 24/08, H04B 17/318, H04B 17/24, H04B 17/23

(54) **A METHOD OF MONITORING RADIO SIGNAL COVERAGE**
VERFAHREN ZUR ÜBERWACHUNG DER FUNKSIGNALABDECKUNG
PROCÉDÉ DE SURVEILLANCE DE LA COUVERTURE D'UN SIGNAL RADIO

(30) Priority: 13.04.2011 GB 201106265
(43) Date of publication of application: 19.02.2014
(73) Proprietor: Druid Software Limited, Bray, County Wicklow (IE)
(72) Inventor: KENNY, Liam, Dublin (IE)
(74) Representative: O'Connor, Michael Donal
(86) International application number: PCT/EP2012/056852
(87) International publication number: WO 2012/140244

(56) References cited:
- WO-A1-2005/029735
- WO-A1-2006/093462
- WO-A2-02/51046
- US-A- 6 035 183
- US-A1- 2003 087 635

## Description

This invention relates to a method of monitoring radio signal coverage in a radio network. More specifically, this invention relates to a method of monitoring radio signal strength in a radio network having at least one radio node using a standard mobile handset.

Throughout the specification, reference is made to a "radio" network. It will be understood that "radio" network is intended to cover 2G, 3G and other radio networks used for mobile communications. The invention will be described predominantly with reference to a GSM network which is typically understood to be a 2-2.75G radio network however it will be understood that this is for illustrative purposes only and the invention is in no way limited to use in only a GSM radio network.

Global System for Mobile Communications (GSM) networks are the most popular networks for mobile communications. These networks comprise a plurality of base transceiver stations, also commonly referred to as radio nodes, which are in radio communication with mobile handsets and provide the conduit between the mobile handsets and the Base Station Controllers (BSCs). The BSCs in turn provide a link to the remainder of the GSM network and other communication networks such as the Public Switched Telephone Network (PSTN) and the Internet.

Due to the fact that communications are routed to and from the mobile handsets through the radio nodes, it is essential to provide sufficient radio signal strength between the mobile handset and the radio node. Weak signal strength can lead to the inability of the mobile handset to make or receive calls and transmit or receive data. It is incumbent on the service provider to ensure that their customers have sufficient radio signal strength so that they can make and receive calls or send and receive data. The service providers achieve this through appropriate deployment of radio nodes throughout the radio network.

If a customer reports weak or no signal strength in a particular location, their service provider will typically attempt to resolve the issue by redeployment or reconfiguration of the radio nodes in the radio network. In some cases, for example in the case of picocells or femtocells which are low-power short-range radio access nodes usually deployed in a building to provide adequate coverage within the building, the problem can be overcome by relocating one or more radio nodes in the building or by providing an additional radio node in the building. In other cases, for example in a macrocell or microcell which are typically high-power long-range GSM networks deployed outdoors, the problem can be overcome by providing an additional radio node or by tilting one or more of the existing radio nodes to provide cover to that location.

Before redeploying or reconfiguring any radio network, for example a GSM network, the service provider must accurately monitor the radio signal strength in that location. This usually entails the service provider sending a skilled engineer to the site and the engineer testing the radio signal strength on site using a field test tool such as a TEMS phone. The field test equipment is able to measure the radio signal strength in the location and determine where the areas of low radio signal strength are. The engineer may then redeploy or reconfigure the radio nodes as appropriate to provide better radio signal coverage in the location.

Although this solves the problem of poor radio signal strength at the location, there are however numerous problems with this method. First of all, in order to measure the radio signal strength, it is necessary to provide specialised equipment, namely a field test tool. Field test tools are relatively expensive, usually costing several thousand dollars and represent a significant cost to the service provider. The field test tool will have different characteristics to the customer's mobile handset and therefore measurements taken by the field test tool will not necessarily provide an entirely accurate reflection of how the customer's mobile handset is experiencing the radio network. Furthermore, the field test tools can be relatively complex to operate and therefore require a skilled operator with appropriate training.

Secondly, the known methods and equipment only measure the downlink signal strength. The downlink signal strength is the radio signal strength from the radio node to the mobile handset. Although useful to know, the downlink measurement only provides part of the radio signal strength picture. The known methods and equipment do not measure the uplink radio signal strength from the mobile handset to the radio node. Due to power differences between the radio node and the mobile handset, the downlink and the uplink measurements may differ substantially and this can significantly alter the effective radio signal strength experienced by the customer at the location.

Various solutions have been proposed to overcome at least some of the above-identified problems. For example, US2003/0087635, in the name of AT&T Wireless Services, Inc. discloses a method of optimizing performance in a mobile communications system in which a mobile unit is provided with standard cellular telephones that are used in the evaluation of the network. Furthermore, this patent application discloses a method in which both the uplink and the downlink information are used in the evaluation of the mobile communications system. EP1081972, in the name of Lucent Technologies Inc., also describes a system and method in which both the uplink and the downlink measurements are used in the evaluation of the wireless communications systems. EP1081972 also appears to disclose a system in which a number of different standard cellular devices may be used in the evaluation of the network. Although the above solutions have gone some way to obviating some of the problems experienced in monitoring radio signal coverage, there are still some problems with the existing solutions. WO02/51046 in the name of Tropian Inc., describes a method and apparatus for providing a reception quality indication on a mobile handset. WO2006/093462 in the name of Telefonaktiebolaget LM Ericsson (PUBL) describes a method for large scale measurement of subjective quality in mobile communication systems. WO2005/029735, in the name of Sony Ericsson Mobile Comm AB, discloses a method for selecting the location of a base station that will provide the best radio conditions, in particular for the weakest link, i.e. the up-link between a mobile terminal and a base station.

Perhaps most disadvantageously, it is still necessary to send a skilled engineer to the remote location which represents a significant cost to the service provider. The engineer must first of all monitor the radio signal coverage at the location before making any adjustments to the existing radio network. In the event of changes being made to the existing radio network, these changes can often result in detrimental knock-on effects in other areas covered by the radio network and therefore, after making any changes, the engineer must monitor the radio signal strength again in the area covered by the radio network to ensure that coverage has not been lost in another area. The optimum coverage is often achieved through trial and error and this can take a significant period of time, increasing the amount of time that the engineer is on site and increasing the cost to the service provider.

It is an object of the present invention to provide a method of monitoring radio signal strength that overcomes at least some of the above-mentioned problems. In particular, it is an object of the present invention to provide a method that limits the need for a skilled technician and reduces the cost and complexity of monitoring radio signal strength.

### Statements of Invention

The invention is defined by the appended set of claims.

According to the invention there is provided a method of monitoring the radio signal coverage at a specific location in a radio network having a radio node using a standard mobile handset, comprising the steps of:
providing a special access point in the radio network;
using the standard mobile handset, calling the special access point to create a communication link between the standard mobile handset and the special access point;
the special access point answering the call thereby establishing the communication link between the standard mobile handset and the special access point, the communication link being serviced by the radio node;
the radio node generating a measurement report containing the downlink measurement indicative of the signal strength from the radio node to the standard mobile handset and the uplink measurement indicative of the signal strength from the standard mobile handset to the radio node;
a monitoring unit receiving the measurement report from the radio node; and
the monitoring unit determining the signal coverage from the measurement report and thereafter transmitting a signal strength indicator to the standard mobile handset.

By having such a method, it is not necessary to provide specialised equipment such as a TEMS phone or a mobile handset with dedicated software running thereon. Instead, any standard mobile handset may be used to implement the invention. In this way, it is also not necessary to provide a skilled engineer to monitor the initial signal strength. The only skill required is the ability to make a call from the mobile handset to the special access point and this may be performed by the customer themselves. Both the uplink and the downlink measurements will be monitored thereby providing the most comprehensive picture of the radio signal strength in the radio network.

Most advantageously, the monitoring unit will determine the signal coverage from the measurement report and will transmit a signal strength indicator to the standard mobile handset. In this way, the monitoring unit will provide an indicator that may be viewed or heard on the mobile handset of the radio signal strength in the mobile handsets current location. The signal strength indicator will be intuitive and will notify the operator of the standard mobile handset what the radio signal strength is in their current location. By doing so, the operator of the standard mobile handset can roam around their premises (in the case of a picocell or femtocell) and determine what the radio signal strength is throughout the premises, where the so-called coverage black-spots are, and where radio signal strength is at an acceptable level. This is achieved using their own standard mobile handset without the need for a skilled engineer to be present. This will obviate the need for an Engineer to revisit a site and will significantly reduce the cost of monitoring the radio signal coverage in a particular location.

The signal strength indicator of the present invention is not to be confused with the standard type of signal strength indicator common to mobile telephones showing one or more "bars" that are indicative of radio signal strength. These indicators are not well defined from handset to handset and would not provide a predictable consistent result across a number of different handsets (since these indicators would be mapped to differing criteria on each handset). Furthermore, the known indicators don't include uplink measurements in the generation of their signal strength indicator. Accordingly, the signal strength indicator according to the present invention will be a different signal strength indicator and in the case of a graphical representation of the signal strength indicator, the graphical representation will comprise a more precise standardized measurement system common to all handsets that is created irrespective of the phone type or phone criteria.

In one embodiment of the invention the signal strength indicator is transmitted over the communication link between the special access point and the standard mobile handset. This is a particularly effective way of transmitting the signal strength indicator and will utilize the communication link that is already open with the mobile handset. The monitoring unit will have access to the special access point and will transmit the signal strength indicator over the communication link from the special access point.

In one embodiment of the invention the signal strength indicator comprises an audio signal.

In one embodiment of the invention the audio signal is an audio tone that varies according to the signal strength. This is seen as a particularly intuitive way to demonstrate the radio signal strength to the operator of the standard mobile handset.

In one embodiment of the invention one or more of the frequency, amplitude, timbre and duration of the audio tone varies according to the signal strength.

In one embodiment of the invention the signal strength indicator comprises a visual signal displayed on a user interface of the standard mobile handset.

In one embodiment of the invention, the method comprises the additional steps of:
providing a plan layout of a location with a plurality of measurement points indicated thereon to an operator of the standard mobile handset;
the operator of the standard mobile handset transporting the standard mobile handset to each of the measurement points;
capturing the downlink measurement and the uplink measurement at each of the measurement points and generating a measurement report for each of the measurement points; and
the monitoring unit generating a radio coverage map of the location.

In this way, the radio signal coverage inside a specified location may be measured and mapped in a relatively simple and straightforward manner. The provision of a plan layout with the plurality of measurement points will ensure that a relatively unskilled operator can take the measurements required to correctly evaluate the signal coverage throughout the location and replicate the process if required.

In one embodiment of the invention the radio network comprises one or more of a picocell and a femtocell and the radio coverage map is a radio coverage map of a building in which the picocell or femtocell is located.

In one embodiment of the invention the monitoring unit is incorporated into one of a Radio Network Controller (RNC) and a Base Station Controller (BSC). The monitoring unit may be implemented largely in software and may be located on the RNC or BSC thereby obviating the need for additional circuitry or hardware.

In one embodiment of the invention the special access point in the GSM network comprises an extension number in the picocell or femtocell radio network. This is seen as a simple way of implementing the special access point. As an alternative to the extension number, the special access point could be implemented using a special URL for a data-based access point using a browser.

In one embodiment of the invention the standard mobile handset is GPS enabled and the method comprises the additional steps of:
transmitting the standard mobile handset GPS position information to the monitoring unit;
the monitoring unit correlating the GPS position information with the measurement report; and
the monitoring unit generating a radio coverage map.

This is seen as another particularly advantageous aspect of the present invention. If the mobile handset is GPS enabled, the position of the mobile handset can also be ascertained as the operator moves about the radio network. This will enable the exact location of the operator and the position of a coverage black-spot to be plotted with a great degree of accuracy. This will also allow for the generation of a comprehensive radio coverage map of the building (in the case of a picocell or femtocell) to be created simply by the operator roaming around the building with their standard mobile handset in communication with the special access point.

In one embodiment of the invention the radio network comprises one or more of a macrocell and a microcell and the radio coverage map is a radio coverage map of an area covered by the macrocell or microcell.

In one embodiment of the invention the macrocell or microcell are provided with means to transmit the measurement report to the monitoring unit located remotely from the macrocell or microcell. In this way, the monitoring unit may be located remotely from the macrocell or microcell and in the case of a national or regional network, a single monitoring unit may be used to service a plurality of macrocells or microcells.

In one embodiment of the invention there is provided a method comprising the steps of:
monitoring the signal strength and GPS position of a plurality of standard mobile handsets at a plurality of locations covered by a plurality of different macrocells or microcells in the radio network; and
building a radio coverage map for the radio network.

By implementing this method, a coverage map for an entire national or regional radio network comprising a plurality of different types of cells could be provided. This will result in significant savings for the service provider and can obviate the need for so-called "drive tests" whereby skilled engineers drive to different areas in the national or regional radio network testing the radio signal strength or coverage in the various different locations across the radio network. If desired, the tests can be carried out using a range of disparate standard mobile handsets from one or more manufacturers and the signal strength experienced by a number of different types of device can be deduced. This will provide a general view of the radio network signal coverage over time. Alternatively, certain types of standard mobile handset can be targeted and the signal coverage of the radio network as experienced by that type of device throughout the network can be determined and analysed.

### Detailed Description of the Invention

The invention will now be more clearly understood from the following description of some embodiments thereof given by way of example only with reference to the accompanying drawings, in which:-
Figure 1 is a diagrammatic representation of a system including a GSM network in which the method according to the invention is implemented;
Figure 2 is a floor plan layout of a building having a GSM picocell network; and
Figure 3 is the floor plan layout shown in Figure 2 with a reconfigured GSM picocell network.

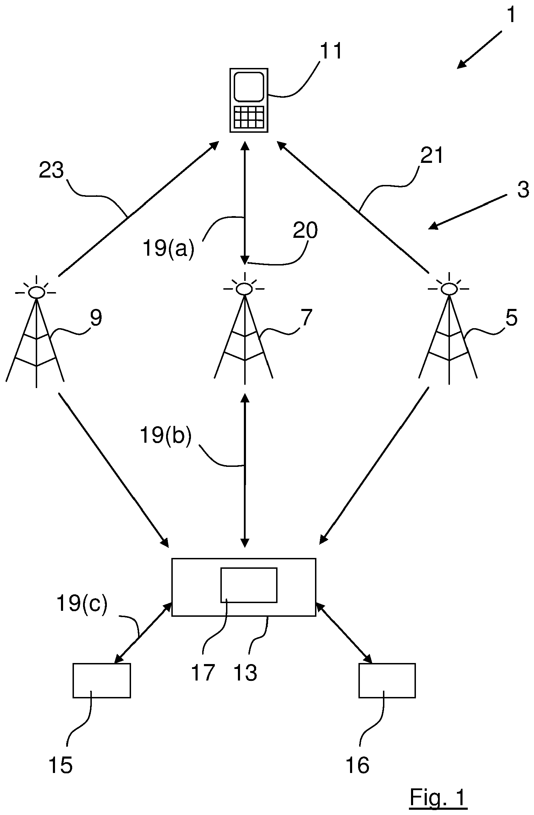

Referring to Figure 1, there is shown a system, indicated generally by the reference numeral 1, in which the method according to the invention is implemented. The system comprises a GSM network 3 comprising a plurality of radio nodes 5, 7, 9, a standard mobile handset 11 and a base station controller (BSC) 13. The BSC 13 comprises a monitoring unit 17. There is further shown a special access point 15 of the GSM network 3 and a Mobile Switching Centre (MSC) 16. The special access point 15 is hosted by the system implementing the invention.

In the present invention, the special access point is simply an address that may be contacted by the standard mobile handset that will enable the establishment of a communication link 19(a), 19(b), 19(c) that can in turn be monitored. The special access point can be a dedicated telephone number such as but not limited to an extension number (e.g. for audio communication link monitoring), a URL (e.g. for data communication link monitoring) or like termination point for the communication link. The monitoring unit 17 will have access to and be able to transmit signal strength indicators to the standard mobile handset over the communication link 19(a), 19(b), 19(c).

In use, the operator of the standard mobile handset 11 calls the special access point 15 in an attempt to create a communication link 19(a), 19(b), 19(c) between the standard mobile handset 11 and the special access point 15. The special access point 15 answers the call thereby establishing the communication link 19(a), 19(b), 19(c) between the special access point and the standard mobile handset.

In the present example, the parts of the communication link marked 19(a) and 19(b) are serviced by the radio node 7, commonly referred to as the servicing radio node. The servicing radio node 7 monitors the part of the communication link 19(a) between the servicing radio node 7 and the standard mobile handset 11 and generates a measurement report containing the downlink measurement, which is the radio signal strength from the servicing radio node 7 to the standard mobile handset 11, and the uplink measurement, which is the radio signal strength from the standard mobile handset 11 to the servicing radio node 7.

The downlink measurement will have been sent to the servicing node by the mobile handset 11. The standard mobile handset measures the downlink transmission from each of the radio nodes and regularly sends a report (e.g. in GSM radio networks every 0.5 seconds) to the servicing radio node 7 with these measurements. The servicing radio node 7 packages the downlink measurements together with the uplink measurements it has taken and forwards these measurements in a measurement report to its controller (in this case, the BSC). Hence the controller 13 is in possession of both the uplink and downlink measurements which it requires to effect handover decisions. These measurements could be accessed by the present invention through an interface with the BSC (or RNC in a 3G network). According to one embodiment of the invention, the monitoring unit and the BSC are implemented in the same unit and the information can be made available through an API of the BSC. Alternatively, the information could be retrieved by probing the interface 20 (the ABIS (BTS to BSC) or luB (for 3G) interface). The measurement report is then transmitted from the servicing radio node 7 onwards to the monitoring unit 17 in the BSC 13.

In addition to the downlink measurement from the servicing radio node 7, the downlink measurements from the radio nodes 5, 9 will also be provided. The mobile station monitors the signal strength on the active channel (interface 19) between the mobile station and the servicing node 7 and also measures the signal strength of the broadcast channels on the neighbouring cells 5, 9. The downlink measurements as experienced by the mobile handset for nodes 7, 9 and 5 are sent every 0.5 seconds to the servicing radio node 7, which packages them together with the uplink measurements taken from the mobile handset on interface 19 and forwards the combined measurements to the BSC over interface 19. The monitoring unit will thereafter be able to determine precisely what the radio signal strength is experienced by the standard mobile handset at that specific location.

The monitoring unit will transmit a signal strength/coverage indicator to the standard mobile handset to inform the operator of the standard mobile handset what the radio signal strength is at that location. In one embodiment of the invention this signal coverage indicator comprises a varying audio tone that is indicative of the radio signal coverage. The frequency and the amplitude of the audio tone increase with increasing radio signal strength and decrease with decreasing radio signal strength. A useful analogy is that in this way, the operator can use their standard mobile handset in a manner similar in operation to a metal detector with the exception that the standard mobile handset is detecting radio signal strength instead of metallic objects. The audio signal emanating from the mobile handset will indicate to the operator whether there is good signal strength in that location or whether there is poor signal strength in that location and how the signal strength varies as they move from that location in any given direction.

In addition to or as an alternative to the above embodiment, the signal strength indicator can relay the signal strength information to the user of the standard mobile handset in alternative ways. For example, the signal strength indicator may comprise a pictorial, alphabetical and/or numerical representation of the signal strength. For example, a graduated scale between one and ten may be devised with ten being very strong coverage to one being very weak to no coverage and the number could be displayed on the screen of the standard mobile handset. Alternatively or in addition to the above, the number could be communicated through the standard mobile handset in spoken word form. Instead of a numerical value, a graduated scale comprising for example the levels "very weak", "weak", "average", "strong" and "very strong" or the like could be devised depending on the signal strength and the signal strength indicator could comprise a display of the relevant level on the user interface of the standard mobile handset and/or the level "spoken" through the standard mobile handset. Various pictorial representations such as a pie chart or the like could be used to represent the signal. It is envisaged however that providing a varying audio tone will be the preferred solution.

The signal strength will normally be selected from the best (i.e. the strongest) available downlink measurement and the uplink measurement, whichever of the two is lower (i.e. weaker). It is also possible to set the indicator to measure the strength from a particular radio node which may be useful in troubleshooting and it is envisaged that all measurements can be queried at any time by pressing a key on the mobile handset with the responses "spoken" through the audio path. The measurements taken can also be recorded by pressing keys to take more formal measurement reports. These reports can be made available remotely to the network operator having been taken by the customer.

In additional to the above, the standard mobile handset 11 is Global Positioning System (GPS) enabled and the GPS co-ordinates are transmitted from the mobile handset to the monitoring unit 17. The monitoring unit correlates the GPS co-ordinates with the radio signal strength data and builds a radio coverage map. This is particularly useful for the service provider and the operator alike as they can graphically show the areas where there are coverage black-spots and the areas where there is good coverage. This will enable the service provider to determine whether reconfiguration of one or more of the radio nodes is likely to cause problems in other areas. In a macrocell or microcell environment, this will also enable the service provider to accurately pinpoint the location of the black-spot.

Although GPS is an effective way to plot a formal measurement report automatically, the measurement report can also be created manually using key presses on the mobile handset with the aid of a site map. The site map could for example be a blueprint or like drawing showing the internal layout of the building and there will preferably be provided a number of measurement points indicated on the map. These measurement points are the locations spread about the interior of the building where a measurement of the signal strength is to be taken. The operator travels around the building with the handset and the site map and takes a radio coverage measurement at each of the measurement points indicated on the site map. A note of the measurements is taken and the coverage at each of the points on the map can be determined.

Each of the measurement points could be provided with an individual measurement point identifier. When the operator reaches a particular measurement point location, they can enter the measurement point identifier into the standard mobile handset and the measurement data at that moment in time will be attributed to that measurement point. Instead of entering in the identifier manually using a keypad of the user interface, the operator may be provided with a list of the measurement point identifiers on the standard mobile handset and they can select the measurement point identifier from the list of measurement point identifiers. As a further alternative, the site map may be an electronic map displayed on the standard mobile handset. The electronic map may be interactive and allow selection of a measurement point by an operator using a touchscreen or other method. Due to the fact that GPS is relatively weak indoors, the GPS solution is much more effective outdoors and is useful for macro or micro network coverage mapping. The indoor maps are more likely to be done manually with a site map and key presses as described above.

In order to capture the correct communication link between the mobile handset and the special access point, the following steps are performed. The special access point will have the calling number on receipt of the call from the mobile handset. This calling number can be mapped to the International Mobile Subscriber Identity (IMSI) in the home location registry (HLR) (not shown). Once the IMSI is known, the appropriate channel can be monitored at the BSC. In the embodiment of the invention in which IP addresses are used, a mapping to the IMSI is performed using a GPRS support node (GSN). If the IMEI is known, it will also be possible to target the performance of various specific types of handset and how they are experiencing the network. The IMEI contains unique identifiers for the individual standard mobile handsets as well as a prefix which indicates the type of handset being monitored. The IMEI may be retrieved by intercepting the IMEI on the communication link 19(a), 19(b), 19(c) or via an interface with the radio node.

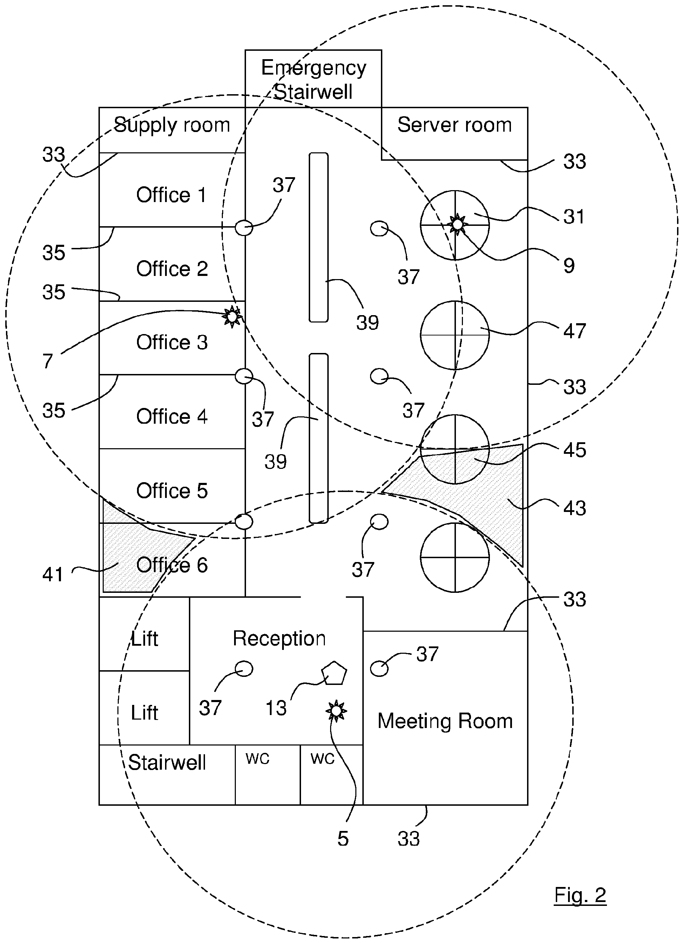

Referring to Figure 2, there is shown a floor plan layout of a building having a GSM picocell network, where like parts have been given the same reference numeral as before. There are three radio nodes 5, 7, 9 in the GSM network. Radio node 5 is located in reception, radio node 7 is located in Office No. 3 and radio node 9 is located at group workstation 31. The effective GSM coverage area of each of the radio nodes is represented graphically by the dashed circle surrounding the respective radio node. It will be understood that although each of the coverage areas has been shown as a circular area, in practice the coverage areas will not usually be symmetrically formed surrounding the radio nodes. This is due to the fact that walls 33, partitions 35, structural columns 37 and furniture such as filing cabinets 39 will all affect the radio signal strength resulting from the radio nodes 5, 7, 9. However, for simplicity and the purposes of this example only, the coverage areas have been shown as symmetrical about the respective radio nodes. The BSC 13 is located in reception and is shown distinct from radio node 5 but it is envisaged that the BSC and the radio node 5, or indeed the BSC and any of the other radio nodes 7, 9 could be incorporated into a single device.

Generally speaking picocell and femtocell radio nodes are connected to a fixed cable network, usually CAT5 or CAT6, in a building. More often than not in a standard network, the controlling (BSC) node will not be located in the building at all with picocell or femtocell. Instead, the BSC would be in the operator's network, with the radio nodes 5, 7, 9 connecting back to the controlling node 13 via a broadband connection. In one embodiment according to the invention, a full network function is implemented on site including BSC/MSC and the like.

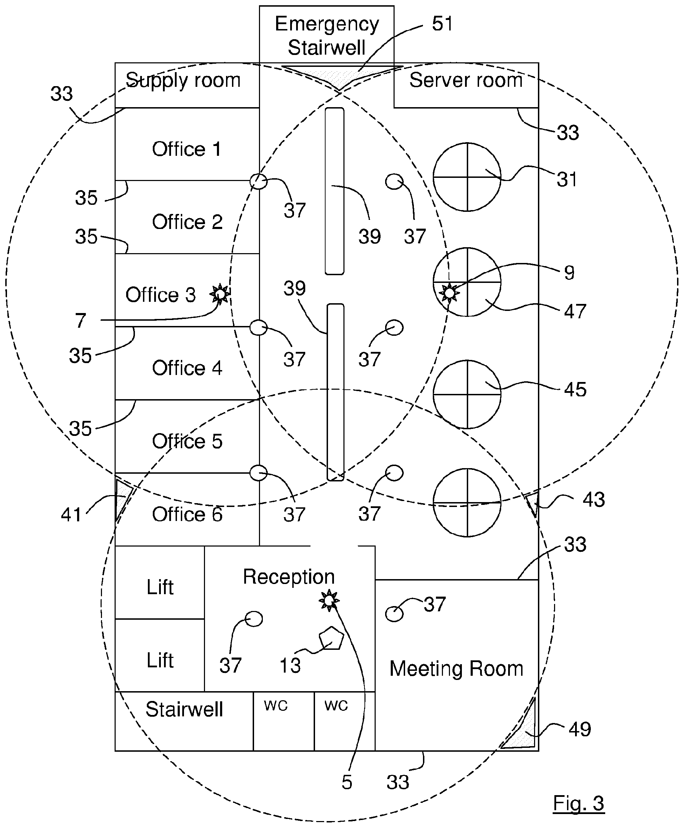

It can be seen from Figure 2 that there are two areas of inadequate coverage in the building, shaded area 41 located predominantly in Office No. 6 and shaded area 43, located adjacent group workstation 45. These areas 41, 43 are deemed to have insufficient GSM coverage to reliably carry a call. In order to solve the problem, the radio nodes 5, 7, 9 can be moved to provide more evenly distributed GSM signal strength / coverage throughout the entire floor of the building, as illustrated in Figure 3. The radio node 5 has been moved in reception, the radio node 7 has been moved slightly within Office No. 3 and the radio node 9 has been moved from group workstation 31 to group workstation 47. The resultant coverage areas of the radio nodes with adequate signal strength are shown in Figure 3 and these now provide practically total coverage within Office 6 and adjacent the group workstation 45. It can be seen that there is a trade-off in this instance, although in many instances there will be no trade off required, in that two new areas of insufficient coverage are formed in the building, one in the meeting room indicated by shaded area 49 and one adjacent the emergency stairwell indicated by shaded area 51. However, these areas are much less frequently occupied by people requiring GSM radio coverage and therefore the trade-off is warranted.

Under normal circumstances, a customer in Office No. 6 or that works at group workstation 45 will indicate to the service provider that they have inadequate GSM coverage at that location. The customer can check the level of coverage by using their standard mobile handset to make a call to a special access point. In this instance, the special access point is an extension number hosted by the BSC. Once the call is established, a monitoring unit 17 on the BSC will begin to receive measurement reports from the servicing radio node. The measurement reports will comprise the downlink measurements for each of the three radio nodes 5, 7, 9 experienced by the standard mobile handset as well as the uplink measurement between the standard mobile handset and the servicing radio node. If for example the customer is in Office No. 6, the servicing radio node may be radio node 7.

The monitoring unit 17 will receive the measurement reports and from those reports will generate a signal strength indicator tone which it transmits to the standard mobile handset over the communication link. This tone will indicate to the customer the level of signal coverage in that area and whether or not there may be a problem with their phone rather than the signal coverage. If the signal coverage is very weak, the radio nodes 5, 7, 9 can be moved throughout the floor of the building in order to improve the coverage at the specific location. Typically, the above actions will be taken by an individual, for example an IT manager, with responsibility for communications in the building and by "customer", it is meant this individual. This is to ensure that not everyone in the building will be allowed to test the radio signal strength and/or move the radio nodes without the appropriate permission.

Ideally, the IT manager or responsible person, on identifying that there is a problem area, will carry out a survey of the entire floor of the building using their standard mobile device and provide a coverage map of the floor. This will allow them to determine if and how they can move the existing radio nodes to improve coverage or whether they need to provide a further radio node on the floor in order to provide adequate coverage throughout the floor. Similarly, the results can be sent to a remote location such as a service provider's control centre where the service provider can view the coverage map and determine the best way to handle the problem and where the radio nodes might be placed in order to provide better coverage. If the standard mobile handset is GPS enabled and the GPS co-ordinates are available, the GPS co-ordinates can be sent to the monitoring unit and used in the creation of a coverage map. Alternatively, the map can be created manually by the responsible individual by taking signal coverage measurements at a number of predetermined points on a plan layout of the floor. It is envisaged that the signal strength coverage map could take many forms as will be understood by one skilled in the art. For example, a numerical value or other indicator (e.g. a colour) representative of the signal strength in that area could be superimposed on a map of the floor, building or area.

According to the manual embodiment of the invention, the manual measurements can be obtained easily by taking a map and indicating on this map the measurement points where the signal strength values are to be taken. The user walks around the site to the measurement points and enters the measurement number on the handset (while connected to a dedicated application) and the system logs all the uplink and downlink measurements automatically associating them with the measurement number entered on the keypad. This will help reduce the workload for the person doing the survey.

The use of GPS is seen as particularly effective in embodiments of the invention used in macrocells or microcells whereby the customer's position can be very accurately determined by the service provider and the black-spots can be identified with ease. Furthermore, the use of GPS will allow monitoring of a number of calls in a relatively short period of time across the entire network to build a consistent coverage pattern for the entire network.

A further aspect of the present invention is that the effectiveness of different types of standard mobile handsets can be evaluated and compared against other types of mobile handsets to see which models of mobile handsets are more likely to experience difficulties in a particular location than other models. This can provide useful feedback to the customer about their choice of company phone and/or the mobile handset manufacturers about the capabilities of their products.

In the embodiments shown, there are three radio nodes. It will be understood that more or less radio nodes could be provided and the invention is in no way limited to an embodiment with three network nodes. Indeed, the present invention has use in applications with only one radio node or in applications with a plurality of radio nodes.

In this specification, the terms "radio node" and "controller node" have been used throughout. It will be understood by one of skill in the art that, depending on the radio network in question, these terms will refer to different pieces of equipment. In a 2G network, a "radio node" will typically be understood to be a Base Transceiver Station (BTS) whereas in a 3G network, the term "radio node" will be understood to mean a NodeB. In a 2G network, a "controller node" will typically be understood to be a Base Station Controller (BSC) whereas in a 3G network, the term "controller node" will be understood to mean a Radio Network Controller (RNC). The terms "radio node" and "controller node" will also refer to equipment in 4G and beyond radio networks that perform the same functionality as the BTS and BSC respectively in the 2G network and the NodeB and the RNC respectively in the 3G network.

It will be understood that the method according to the present invention will be performed largely in software and therefore the present invention extends also to computer programs, on or in a carrier, comprising program instructions for causing a computer to carry out steps of the method, in particular the monitoring steps, the provision of the signal strength indicator step and the generation of the coverage map step. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further understood that the present invention may be performed on two, three or more machines with certain parts of the computer-implemented method being performed by one machine and other parts of the computer-implemented method being performed by another device. The devices may be part of a LAN, WLAN or could be connected together over a communications network including but not limited to the internet. Many of the method steps could be performed "in the cloud", meaning that remotely located processing power may be utilised to process certain method steps of the present invention. Accordingly, it will be understood that many of the method steps may be performed remotely, by which it is meant that the method steps could be performed either on a separate machine in the same locality or jurisdiction or indeed on a separate machine or machines in one or several remote jurisdictions. For example, the BSC could be in a first jurisdiction whereas the remainder of the GSM network could be in a second jurisdiction. The present invention and claims are intended to also cover those instances where the method is performed across two or more machines or pieces of apparatus located in one or more jurisdictions and those situations where the parts of the system are spread out over one or more jurisdictions.

In this specification the terms "comprise, comprises, comprised and comprising" and the terms "include, includes, included and including" are all deemed totally interchangeable and should be afforded the widest possible interpretation.

## Claims

1. A method of monitoring the radio signal strength at a specific location in a radio network (3) having a radio node (5, 7, 9) using a standard mobile handset (11), comprising the steps of:
providing a special access point (15) in the radio network, the special access point comprising an address that may be contacted by the standard mobile handset that will enable the establishment of a communication link, the special access point comprising one of a dedicated telephone number, a URL or like termination point for the communication link;
using the standard mobile handset (11), calling the special access point to create a communication link (19) between the standard mobile handset and the special access point;
the special access point (15) answering the call thereby establishing the communication link between the standard mobile handset and the special access point, the communication link being serviced by the radio node;
the radio node (7) generating a measurement report containing the downlink measurement indicative of the signal strength from the radio node (7) to the standard mobile handset (11) and the uplink measurement indicative of the signal strength from the standard mobile handset to the radio node;
a monitoring unit (17) receiving the measurement report from the radio node; and
the monitoring unit (17) determining the signal strength from the measurement report by selecting the lower of the strongest uplink measurement and the strongest downlink measurement received by the standard mobile handset, and thereafter transmitting a signal strength indicator to the standard mobile handset (11) over the communication link (19) between the special access point and the standard mobile handset;
and in which the method comprises the additional steps of:
providing a plan layout of a location with a plurality of measurement points indicated thereon to an operator of the standard mobile handset (11);
the operator of the standard mobile handset transporting the standard mobile handset (11) to each of the measurement points;
capturing the downlink measurement and the uplink measurement at each of the measurement points and generating a measurement report for each of the measurement points; and
the monitoring unit (17) generating a radio coverage map of the location based on the generated measurement reports.

2. A method as claim in claim 1 in which the signal strength indicator comprises an audio signal.

3. A method as claimed in claim 2 in which the audio signal is an audio tone that varies according to the signal strength.

4. A method as claimed in claim 3 in which one or more of the frequency, amplitude, timbre and duration of the audio tone varies according to the signal strength.

5. A method as claimed in any preceding claim in which the signal strength indicator comprises a visual signal displayed on a user interface of the standard mobile handset (11).

6. A method as claimed in claim any preceding claim in which the radio network (3) comprises one or more of a picocell and a femtocell and the radio coverage map is a radio coverage map of a building in which the picocell or femtocell is located.

7. A method as claimed in claim 6 in which the monitoring unit (17) is incorporated into one of a Radio Network Controller (RNC) and a Base Station Controller (BSC) (13).

8. A method as claimed in claim 6 or 7 in which the special access point (15) in the radio network comprises an extension number, namely a dedicated telephone number for audio communication link monitoring, in the picocell or femtocell radio network.

9. A method as claimed in any preceding claim in which the standard mobile handset (11) is GPS enabled and the method comprises the additional steps of:
transmitting the standard mobile handset GPS position information to the monitoring unit (17);
the monitoring unit (17) correlating the GPS position information with the measurement report; and
the monitoring unit (17) generating a radio coverage map.

10. A method as claimed in claim 9 in which the radio network (3) comprises at least one of a macrocell and a microcell and the radio coverage map is a radio coverage map of an area covered by the macrocell or microcell.

11. A method as claimed in 10 in which the macrocell or microcell are provided with means to transmit the measurement report to the monitoring unit (17) located remotely from the macrocell or microcell.

12. A method as claimed in claim 10 or 11 comprising the steps of:
monitoring the signal strength and GPS position of a plurality of standard mobile handsets (11) at a plurality of locations covered by a plurality of different macrocells and or microcells in the radio network; and
building a wide area radio coverage map for the radio network.

## Patentansprüche

1. Verfahren zur Überwachung der Radiosignalstärke an einem spezifischen Standort in einem Radionetzwerk (3) mit einem Radioknoten (5, 7, 9) vermittels eines standardmäßigen mobilen Handgeräts (11), welches die folgenden Schritte umfasst:
Bereitstellen eines speziellen Zugangspunktes (15) im Radionetzwerk, wobei der spezielle Zugangspunkt eine Adresse umfasst, die von dem standardmäßigen mobilen Handgerät kontaktiert werden kann, das die Herstellung einer Kommunikationsverbindung ermöglicht, wobei der spezielle Zugangspunkt eine von einer zweckgebundenen Telefonnummer, einer URL oder einem ähnlichen Endpunkt für eine Kommunikationsverbindung umfasst;
Anrufen des speziellen Zugangspunkts vermittels des standardmäßigen mobilen Handgeräts (11) zum Herstellen einer Kommunikationsverbindung (19) zwischen dem standardmäßigen mobilen Handgerät und dem speziellen Zugangspunkt;
Beantworten vonseiten des speziellen Zugangspunkts (15) des Anrufs, wodurch die Kommunikationsverbindung zwischen dem standardmäßigen mobilen Handgerät und dem speziellen Zugangspunkt hergestellt wird, wobei die Kommunikationsverbindung vom Radioknoten vermittelt wird;
Erstellen eines Messberichts vonseiten des Radioknotens (7), enthaltend die Downlinkmessung, welche die Signalstärke vom Radioknoten (7) zum standardmäßigen mobilen Handgerät (11) angibt, und die Uplinkmessung, welche die Signalstärke vom standardmäßigen mobilen Handgerät zum Radioknoten angibt;
Empfangen durch eine Überwachungseinheit (17) des Messberichts vom Radioknoten; und
Bestimmen durch die Überwachungseinheit (17) der Signalstärke aus dem Messbericht durch Auswählen der geringeren der stärksten Uplinkmessung und der stärksten Downlinkmessung, die vom standardmäßigen mobilen Handgerät empfangen worden sind, und anschließend Übertragen durch die Überwachungseinheit eines Signalstärkeindikators an das standardmäßige mobile Handgerät (11) über die Kommunikationsverbindung (19) zwischen dem speziellen Zugangspunkt und dem standardmäßigen mobilen Handgerät;
und wobei das Verfahren die folgenden zusätzlichen Schritte umfasst:
Bereitstellen eines Lageplans für einen Standort, auf dem eine Mehrzahl von Messpunkten für einen Bediener des standardmäßigen mobilen Handgeräts (11) angezeigt sind;
Transportieren des standardmäßigen mobilen Handgeräts (11) durch den Bediener des standardmäßigen mobilen Handgeräts zu jedem der Messpunkte;
Aufnehmen der Downlinkmessung und der Uplinkmessung an jedem der Messpunkte und Erstellen eines Messberichts für jeden der Messpunkte; und
Erstellen einer Radioabdeckungskarte des Standorts durch die Überwachungseinheit (17) basierend auf den erstellten Messberichten.

2. Verfahren nach Anspruch 1, wobei der Signalstärkeindikator ein Audiosignal umfasst.

3. Verfahren nach Anspruch 2, wobei das Audiosignal ein Audioton ist, der entsprechend der Signalstärke variiert.

4. Verfahren nach Anspruch 3, wobei ein oder mehrere von Frequenz, Amplitude, Timbre und Dauer des Audiotons entsprechend der Signalstärke variieren.

5. Verfahren nach einem der vorangehenden Ansprüche, wobei der Signalstärkeindikator ein visuelles Signal umfasst, das auf einer Benutzeroberfläche des standardmäßigen mobilen Handgeräts (11) angezeigt wird.

6. Verfahren nach einem der vorangehenden Ansprüche, wobei das Radionetzwerk (3) eine oder mehrere von einer Picozelle und einer Femtozelle umfasst und die Radioabdeckungskarte eine Radioabdeckungskarte eines Gebäudes ist, in dem die Picozelle oder Femtozelle untergebracht ist.

7. Verfahren nach Anspruch 6, wobei die Überwachungseinheit (17) in eine von einer Radionetzwerksteuerung (RNC) und einer Basisstationssteuerung (BSC)(13) eingebaut ist.

8. Verfahren nach Anspruch 6 oder 7, wobei der spezielle Zugangspunkt (15) im Radionetzwerk eine Durchwahlnummer, nämlich eine zweckgebundene Telefonnummer für die Überwachung von Audiokommunikationsverbindungen, im Picozellen- oder Femtozellen-Radionetzwerk umfasst.

9. Verfahren nach einem der vorangehenden Ansprüche, wobei das standardmäßige mobile Handgerät (11) GPS-fähig ist und das Verfahren folgende zusätzliche Schritte umfasst:
Übertragen der GPS-Positioninformation des standardmäßigen mobilen Handgeräts an die Überwachungseinheit (17);
Korrelieren durch die Überwachungseinheit (17) der GPS-Positionsinformation mit dem Messbericht; und
Erstellen einer Radioabdeckungskarte durch die Überwachungseinheit (17).

10. Verfahren nach Anspruch 9, wobei das Radionetzwerk (3) zumindest eine oder mehrere von einer Makrozelle und einer Mikrozelle umfasst und die Radioabdeckungskarte eine Radioabdeckungskarte eines Gebietes ist, welches von der Makrozelle oder Mikrozelle abgedeckt wird.

11. Verfahren nach Anspruch 10, wobei die Makrozelle oder Mikrozelle mit Mitteln zur Übertragung des Messberichts an die Überwachungseinheit (17) ausgestattet ist, deren Standort entfernt von der Makrozelle oder Mikrozelle liegt.

12. Verfahren nach Anspruch 10 oder 11, umfassend die folgenden Schritte:
Überwachen der Signalstärke und GPS-Position einer Mehrzahl von standardmäßigen mobilen Handgeräten (11) an einer Mehrzahl von Standorten, die von einer Mehrzahl von verschiedenen Makrozellen und/oder Mikrozellen im Radionetzwerk abgedeckt sind; und
Aufbauen einer Radioabdeckungskarte für einen weiten Bereich für das Radionetzwerk.

## Revendications

1. Un procédé de surveillance de l'intensité d'un signal radio à un emplacement spécifique dans un réseau radio (3) possédant un nœud radio (5, 7, 9) au moyen d'un combiné mobile standard (11), comprenant les opérations suivantes :
la fourniture d'un point d'accès spécial (15) dans le réseau radio, le point d'accès spécial comprenant une adresse qui peut être contactée par le combiné mobile standard qui permettra l'établissement d'une liaison de communication, le point d'accès spécial comprenant un élément parmi un numéro de téléphone dédié, un URL ou un point de terminaison de même nature pour la liaison de communication,
au moyen du combiné mobile standard (11), l'appel du point d'accès spécial de façon à créer une liaison de communication (19) entre le combiné mobile standard et le point d'accès spécial,
la réponse par le point d'accès spécial (15) à l'appel, établissant ainsi la liaison de communication entre le combiné mobile standard et le point d'accès spécial, la liaison de communication étant desservie par le nœud radio,
la génération par le nœud radio (7) d'un rapport de mesure contenant la mesure en liaison descendante indicative de l'intensité de signal à partir du nœud radio (7) vers le combiné mobile standard (11) et la mesure en liaison montante indicative de l'intensité de signal à partir du combiné mobile standard vers le nœud radio,
la réception par une unité de surveillance (17) du rapport de mesure à partir du nœud radio, et
la détermination par l'unité de surveillance (17) de l'intensité de signal à partir du rapport de mesure par la sélection de la valeur la plus faible parmi la mesure en liaison montante la plus élevée et la mesure en liaison descendante la plus élevée reçues par le combiné mobile standard, et ensuite la transmission par l'unité de surveillance d'un indicateur d'intensité de signal au combiné mobile standard (11) par l'intermédiaire de la liaison de communication (19) entre le point d'accès spécial et le combiné mobile standard,
et dans lequel le procédé comprend les opérations additionnelles suivantes :
la fourniture d'une disposition sous forme de plan d'un emplacement avec une pluralité de points de mesure indiqués sur celle-ci à un opérateur du combiné mobile standard (11),
le transport par l'opérateur du combiné mobile standard du combiné mobile standard (11) vers chacun des points de mesure,
la capture de la mesure en liaison descendante et de la mesure en liaison montante à chacun des points de mesure et la génération d'un rapport de mesure pour chacun des points de mesure, et
la génération par l'unité de surveillance (17) d'une carte de couverture radio de l'emplacement en fonction des rapports de mesure générés.

2. Un procédé selon la Revendication 1 dans lequel l'indicateur d'intensité de signal comprend un signal audio.

3. Un procédé selon la Revendication 2 dans lequel le signal audio est une tonalité audio qui varie en fonction de l'intensité de signal.

4. Un procédé selon la Revendication 3 dans lequel un ou plusieurs éléments parmi la fréquence, l'amplitude, le timbre et la durée de la tonalité audio varient en fonction de l'intensité de signal.

5. Un procédé selon l'une quelconque des Revendications précédentes dans lequel l'indicateur d'intensité de signal comprend un signal visuel affiché sur une interface utilisateur du combiné mobile standard (11).

6. Un procédé selon l'une quelconque des Revendications précédentes dans lequel le réseau radio (3) comprend une ou plusieurs cellules parmi une picocellule et une femtocellule et la carte de couverture radio est une carte de couverture radio d'un bâtiment dans lequel se trouve la picocellule ou la femtocellule.

7. Un procédé selon la Revendication 6 dans lequel l'unité de surveillance (17) est incorporée dans un dispositif parmi un dispositif de commande de réseau de radiocommunication (RNC) et un dispositif de commande de station de base (BSC) (13).

8. Un procédé selon la Revendication 6 ou 7 dans lequel le point d'accès spécial (15) dans le réseau radio comprend un numéro de poste, à savoir un numéro de téléphone dédié à la surveillance d'une liaison de communication audio, dans le réseau radio picocellulaire ou femtocellulaire.

9. Un procédé selon l'une quelconque des Revendications précédentes dans lequel le combiné mobile standard (11) possède une fonctionnalité GPS et le procédé comprend les opérations additionnelles suivantes :
la transmission des informations de position GPS du combiné mobile standard à l'unité de surveillance (17),
la corrélation par l'unité de surveillance (17) des informations de position GPS avec le rapport de mesure, et
la génération par l'unité de surveillance (17) d'une carte de couverture radio.

10. Un procédé selon la Revendication 9 dans lequel le réseau radio (3) comprend au moins une cellule parmi une macrocellule et une microcellule et la carte de couverture radio est une carte de couverture radio d'une zone couverte par la macrocellule ou la microcellule.

11. Un procédé selon la Revendication 10 dans lequel la macrocellule ou la microcellule est équipée d'un moyen de transmission du rapport de mesure à l'unité de surveillance (17) installée à distance de la macrocellule ou de la microcellule.

12. Un procédé selon la Revendication 10 ou 11 comprenant les opérations suivantes :
la surveillance de l'intensité de signal et de la position GPS d'une pluralité de combinés mobiles standard (11) à une pluralité d'emplacements couverts par une pluralité de macrocellules et/ou de microcellules différentes dans le réseau radio, et
la réalisation d'une carte de couverture radio de zone étendue pour le réseau radio.
